Europäisches Patentamt

European Patent Office

Office européen des brevets

(11) Veröffentlichungsnummer: **0 484 675 A2**

(12) # EUROPÄISCHE PATENTANMELDUNG

(21) Anmeldenummer: **91116854.0**

(22) Anmeldetag: **02.10.91**

(51) Int. Cl.5: **C08J 7/04**, C09D 129/04, B05C 3/12

(30) Priorität: **05.10.90 DE 4031630**

(43) Veröffentlichungstag der Anmeldung: **13.05.92 Patentblatt 92/20**

(84) Benannte Vertragsstaaten: **AT BE CH DE DK ES FR GB GR IT LI LU NL SE**

(71) Anmelder: **BP CHEMICALS (PlasTec) GMBH Martin-Adolff-Strasse 44 W-7905 Dietenheim(DE)**

(72) Erfinder: **Utz, Kastulus Feldhüterstrasse 4**

W-8201 Neubeuern(DE)
Erfinder: **Neumayer, Petra Blumenstrasse 5**
**W-8201 Grosskarolinenfeld(DE)**

(74) Vertreter: **Dost, Wolfgang, Dr.rer.nat.,Dipl.-Chem. et al Patent- & Rechtsanwälte Bardehle . Pagenberg . Dost . Altenburg . Frohwitter . Geissler & Partner Galileiplatz 1 Postfach 86 06 20 W-8000 München 86(DE)**

(54) **Verbundstoff mit mindestens einer Trägerschicht und einer gasundurchlässigen Beschichtung und Verfahren zu dessen Herstellung.**

(57) Es handelt sich um einen Verbundstoff aus mindestens einer Trägerschicht mit einer gasundurchlässigen Beschichtung aus Polyvinylalkohol/Melaminharz und die Herstellung desselben. Die Trägerschicht besteht aus einer Folie aus thermoplastischem Kunststoff. Die beschichtete Kunststoffolie kann sich auf einem weiteren Träger aus Papier, Pappe, Zellulosehydrat, Textilien oder Aluminium befinden.

Fig. 9

Rank Xerox (UK) Business Services
(3.08/2.19/2.0)

Die Erfindung bezieht sich auf einen Verbundstoff mit mindestens einer Trägerschicht, auf der sich eine gasundurchlässige Beschichtung befindet, die aus ausgehärtetem Polyvinylalkohol/Melaminharz besteht und ein Verfahren zu dessen Herstellung.

Es gibt bereits gasundurchlässige Verbundstoffe, wobei die Gasundurchlässigkeit durch Beschichten mit Dispersionen und Lacken erreicht wird. Vor allem die Beschichtung mit Polvinylidenchlorid (PVDC) spielt eine wichtige Rolle. PVDC-Dispersionen liefern bei Mehrschichtauftrag Beschichtungen mit sehr guter Sperrwirkung gegenüber Gasen (insbesondere gegenüber Sauerstoff), z. B. auf Papier, Zellophan, Polypropylen und Aluminiumfolien. Wichtigstes Gebiet der Verbundstoffe ist der Verpackungssektor. Durch den expansiven Einsatz der Verbundstoffe in der Verpackungsindustrie wurde zwangsläufig auch das Problem der Abfallbeseitigung zwingend. Bei der Verbrennung der PVDC-haltigen Folien kommt es zu Chlor-und HCl-Emission.

Der Erfindung liegt nun die Aufgabe zugrunde, bezüglich der Sauerstoff-Dichtigkeit mindestens gleichwertige Verbundstoffe herzustellen, bei deren Verbrennung es nicht zu Chlor- und HCl-Emission kommt.

Gelöst wird diese Aufgabe bei einem Verbundstoff mit mindestens einer Trägerschicht erfindungsgemäß dadurch, daß die Beschichtung aus ausgehärtetem Polyvinylalkohol/Melaminharz besteht.

Die Erfindung bringt den Vorteil mit sich, daß der Verbundstoff ein hochwertiges Material darstellt, das sowohl umweltfreundlich entsorgt werden kann als auch teilweise bei gleichem oder geringerem Materialaufwand bessere Sperrwirkung gegenüber Gasen aufweist als die heutigen gebräuchlichen Materialien ähnlichen Aufbaus.

Bevorzugte Ausführungsformen sind Gegenstand der Ansprüche 2 bis 8.

In einer bevorzugten Ausführungsform befindet sich eine gasundurchlässige Beschichtung aus Polyvinylalkohol/Melaminharz auf einer Trägerschicht, die vorzugsweise aus Polyolefinen besteht.

In einer weiteren bevorzugten Ausführungsform befindet sich die Beschichtung über einer Polyamidschicht (PA), die nach unten durch eine Haftvermittlerschicht mit einer Polyethylenschicht (PE) verbunden ist.

In einer weiteren bevorzugten Ausführungsform ist die Beschichtung über einer Low-Density-Polyethylenschicht (LD-PE), die durch eine Haftvermittlerschicht an eine Polyamidschicht gebunden ist, die wiederum durch eine zweite Haftvermittlerschicht an eine weitere LD-PE-Schicht gebunden ist, aufgebracht.

Eine weitere bevorzugte Ausführungsform stellt einen Verbundstoff dar, bei der die Beschichtung über einer Trägerschicht aus Ethylen-Vinylacetat-Copolymer (EVA-Copolymer), die über einer Schicht aus Polypropylen und einer weiteren Schicht EVA-Copolymer liegt, aufgebracht ist.

In einer weiteren bevorzugten Ausführungsform liegt die Beschichtung über einer Schicht aus Polyamid, die wiederum über einer Schicht aus LD-PE liegt. Der Verbund zwischen der Beschichtung und der Polyamidschicht wird durch Oxidation der Oberfläche noch im Schmelzfluß vor der Vereinigung erzeugt.

Bei einer weiteren bevorzugten Ausführungsform dient die Beschichtung als Barriere- und Kleberschicht zwischen einer Schicht aus Polypropylen und einer aus LD-PE.

In einer weiteren bevorzugten Ausführungsform ist die Beschichtung zwischen einem Haftkleber und einer Polyethylen-Schicht eingebettet. Die Schicht über dem Haftkleber besteht aus einem biaxial-orientierten Film, z.B. Polyester/Polypropylen, Polyamid oder aus Zellglas.

In einer weiteren bevorzugten Ausführungsform besteht die oberste Schicht aus Polyolefin-Blend (PO-Blend), die mit einem Film aus z.B. LD-PE nur bedingt verbunden ist, so daß nach einer Verschweißung der Schichten im Nahtbereich diese wieder getrennt werden kann. Die darunter liegende Schicht ist die gasundurchlässige Beschichtung während die unterste Schicht aus Polypropylen besteht.

In einer weiteren speziellen Ausführungsform ist eine mit Polyvinylalkohol/Melaminharz beschichtete Kunststoffolie auf einen weiteren Träger aus Papier, Pappe, Zellulosehydrat, Textilien oder Aluminium aufgebracht. Das Aufbringen kann in üblicher Weise durch Aufkaschieren oder Auflaminieren erfolgen.

Die Beschichtung unterliegt bezüglich ihrer Dicke keiner besonderen Beschränkung. Bei zu dünner Beschichtung ist die Gasundurchlässigkeit jedoch unzureichend, und bei zu dicker Beschichtung wird der Verbundstoff zu starr. Die Dicke der Beschichtung beträgt vorzugsweise von 1 bis 10 $\mu$m, insbesondere von 5 bis 10 $\mu$m. Die Dicke der Trägerfolie liegt zwischen 20 und 200 $\mu$m, bevorzugt im Bereich zwischen 50 und 150 $\mu$m, besonders bevorzugt im Bereich zwischen 60 und 100 $\mu$m.

Die fertige Beschichtung enthält vorzugsweise 11 % Feststoff, 86 % Wasser und 3 % Alkohol.

Dies wird beispielsweise durch eine Beschichtung erreicht, bei der für einen Beschichtungs-Grundansatz 20 Teile Polyvinylalkohol (Typ LL603, Fa. Wacker-Chemie) in 80 Teilen Wasser gelöst werden. 90 Teile dieser Lösung werden mit 10 Teilen Melaminharz (45%ig, Typ Cymel 1172, Fa. Dyno Cyanamid) versetzt. Der Ansatz für die Beschichtung besteht aus 100 Teilen Grundansatz, die mit 2,2 Teilen Katalysator (Typ Cynat 4040, Lösung von Toluolsulfonsäure (40%) in Isopropanol (60%), Fa. Dyno Cyanamid) versetzt werden. Dieser Ansatz wiederum wird mit 4,3 Teilen Ethanol und 106 Teilen Wasser verdünnt bevor er in die Lackwanne gegeben wird.

Ein Verfahren zum Herstellen eines Verbundstoffs, wie er in den vorausgegangenen Ansprüchen definiert ist, ist Gegenstand des Anspruchs 9. Für diesen Anspruch gelten sinngemäß die vorstehenden sich auf den Verbundstoff beziehenden Ausführungen. Weitere Ausführungsformen des im Anspruch 9 beschriebenen Verfahrens sind Gegenstand der Ansprüche 10 bis 12.

Bei der Herstellung der Beschichtung aus Polyvinylalkohol und Melaminharz wird vorzugsweise Toluolsulfonsäure als Katalysator hinzugesetzt.

Die Aushärtung der Beschichtung geschieht unter der Einwirkung von energiereicher Strahlung oder Wärme. Die Temperatur bei der Wärme-Aushärtung liegt zwischen 100°C und 160°C, sie ist bevorzugt im Bereich zwischen 110°C und 150°C, besonders bevorzugt ist sie zwischen 120°C und 140°C.

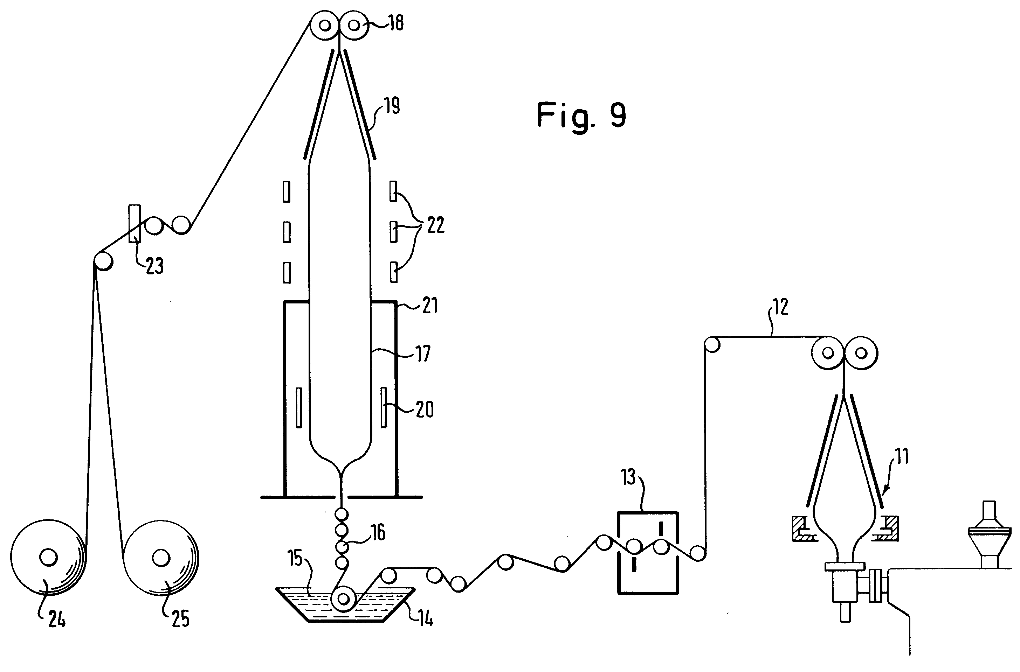

Im folgenden wird die Erfindung anhand der Zeichnungen erläutert. Es zeigen:
- Fig. 1 bis 8:
den Aufbau des Verbundstoffs in verschiedenen Ausführungsformen
- Fig. 9:
schematisch eine Anlage zur Herstellung eines Verbundstoffs, wobei die Herstellung des Trägerstoffs mit in die Anlage integriert ist
- Fig. 10:
eine Anordnung von Extrudern zur Anspeisung verschiedener Rohstoffe auf eine konzentrische Ringdüse (Ausschnitt aus Figur 9)

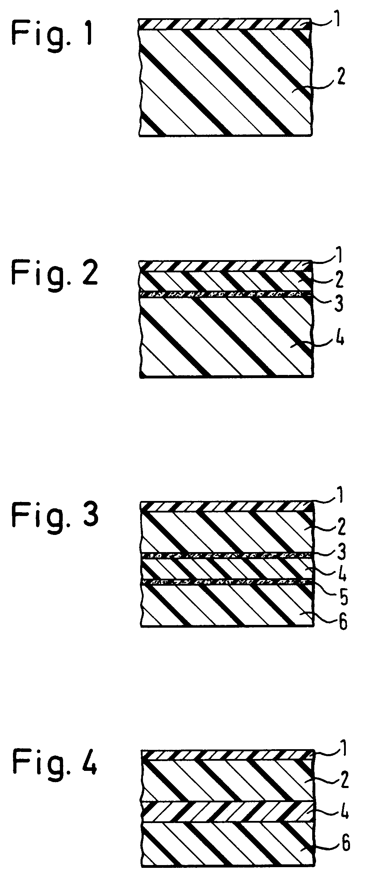

In der bevorzugten Ausführungsform, die in Fig. 1 zu sehen ist, besteht die Beschichtung 1 aus ausgehärtetem Polyvinylalkohol/Melaminharz. Die Schicht 2 kann ein beliebiger Rohstoff sein, vorzugsweise Polyolefine.

Gemäß Fig. 2 besteht der Verbundstoff aus der Beschichtung 1 wie in Fig. 1, aus einer Polyamidschicht 2, einer Haftvermittlerschicht 3 und einer Polyethylenschicht 4.

Wie in Fig. 3 zu sehen, besteht der Verbundstoff aus der Beschichtung 1, einer LD-PE-Schicht 2, einer Haftvermittlerschicht 3, einer Polyamidschicht 4, einer zweiten Haftvermittlerschicht 5 und einer weiteren LD-PE-Schicht 6.

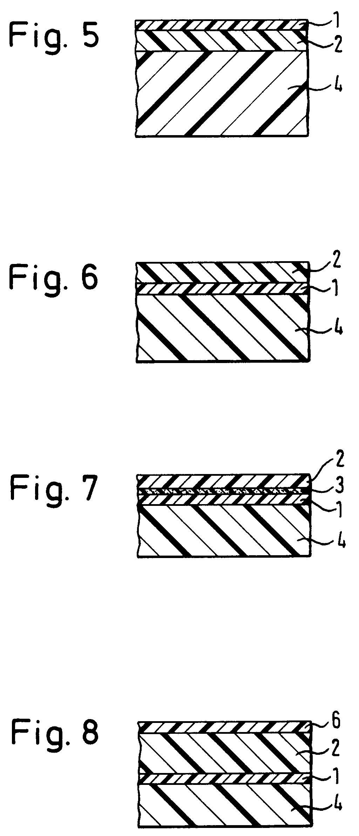

Fig. 4 zeigt einen Verbundstoff bei dem die gasundurchlässige Beschichtung 1 die oberste Schicht bildet; die Schicht 2 besteht aus EVA-Copolymer, die Schicht 4 aus Polypropylen und die Schicht 6 wieder aus EVA.

Fig. 5 stellt einen Verbundstoff dar mit einer gasundurchlässigen Beschichtung 1, einer Schicht 2 aus Polyamid und einer Schicht 4 aus LD-PE. Der Verbund zwischen 1 und 2 wird durch Oxydation der Oberfläche noch im Schmelzfluß vor der Vereinigung erzeugt.

Fig. 6 zeigt einen Verbundstoff bei der die Beschichtung 1 sowohl als Barriereschicht als auch als Kleberschicht zur Verbindung der Schichten 2 aus Polypropylen und 4 aus LD-PE dient.

Fig. 7 zeigt einen Verbundstoff bei der die Beschichtung 1 zwischen die Schichten 3 und 4 eingebettet ist. Die Schicht 2 besteht aus einem biaxial-orientierten Film, z.B. Polyester/Polypropylen, Polyamid oder auch aus Zellglas, wobei die Verbindung der Schichten 2 und 1/4 mittels eines Haftklebers 3 durch Kaschierung in einem zweiten Arbeitsgang verbunden wird. Schicht 4 besteht aus Polyethylen.

Fig. 8 stellt einen Verbundstoff dar, bei die Schicht 6 aus PO-Blend besteht, die mit dem Film 2, z.B. LD-PE, nur bedingt verbunden ist, so daß nach einer Verschweißung der Schichten im Nahtbereich diese wieder getrennt werden kann. In der Fachsprache spricht man von Peeling. Die Beschichtung 1 befindet sich zwischen den Trägerschichten 2 und 4, wobei die Schicht 4 aus Polypropylen besteht.

Die Betriebsweise der in Fig. 9 gezeigten Anlage ist folgende:
Auf einer gebräuchlichen Folienschlauch-Blasanlage 11 wird ein Folienschlauch 12 geblasen. Der Folienschlauch wird einer Corona-Vorbehandlungsstation 13 zugeführt, die eine beidseitige Vorbehandlung bewirkt. Der Schlauch wird nach der Vorbehandlung in ein Tauchbad 14 geführt, in dem sich die wässrige Lösung 15 von Polyvinylalkohol/Melaminharz befindet. Über Rakelwalzen 16 wird der Auftrag der Lösung beidseitig des Schlauches egalisiert und die Auftragsmenge im Naßzustand wird durch die Spannungsführung und die Oberfläche der Rakelwalze definiert. Der beschichtete Schlauch wird aufgeblasen 17 und die eingebrachte Luft wird über ein Walzenpaar 18 eingeschlossen und vor dem Walzenpaar 18 wird der Schlauch durch eine Führungseinrichtung 19 flachgelegt. Auf dem Weg von der Rakelwalze 16 bis zur Flachlegung wird der Schlauch in der ersten Stufe über Infrarotstrahler 20 aufgeheizt und im Trockenkanal 21 bei 130°C getrocknet und vernetzt. Vor der Flachlegung wird der beschichtete Schlauch über ringförmige Luftdüsen 22 gekühlt. Der flachgelegte Schlauch wird nun in einer Aufschneideeinrichtung 23 an den Rändern aufgeschnitten und in Folienbahnen 24,25 getrennt aufgewickelt.

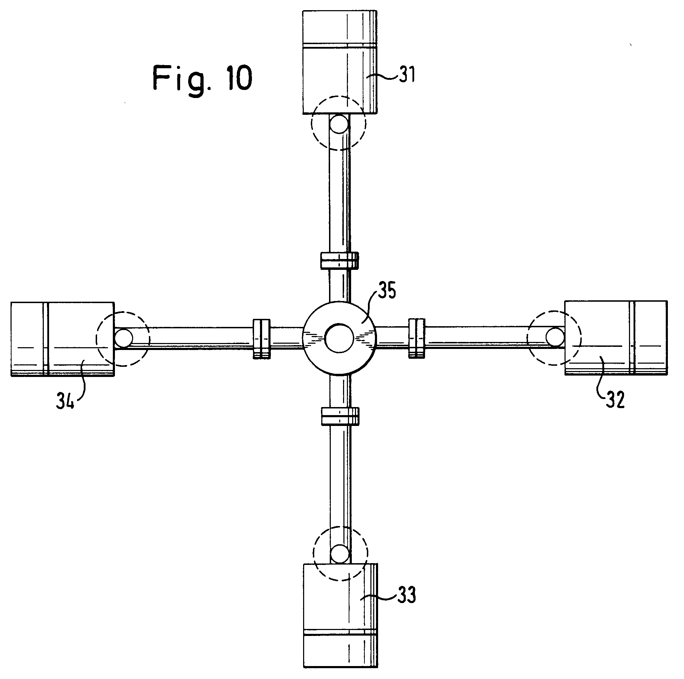

Fig. 10 ist ein Ausschnitt aus Figur 9 und zeigt eine typische Anordnung von Extrudern zur Anspeisung verschiedener Rohstoffe auf eine konzentrische Ringdüse 35, wobei der Schichtaufbau - abhängig von den Rohstoffen - von außen nach innen mit A, B, C, D (Ziffern 31-34) bezeichnet wird. Bei Schichtaufbauten, in denen sich einzelne Schichten wiederholen, bezeichnet man dies mit ABA, was bedeutet, daß der Film aus 3 Lagen besteht, der Extruder A aber die 1. und die 3. Schicht anspeist.

**Patentansprüche**

1. Verbundstoff mit mindestens einer Trägerschicht, auf der sich eine gasundurchlässige Beschichtung befindet, dadurch gekennzeichnet, daß die Beschichtung (1) aus ausgehärtem Polyvinylalkohol/Melaminharz besteht.

2. Verbundstoff nach Anspruch 1, dadurch gekennzeichnet, daß die Trägerschicht (2,4,6) eine Folie aus einem thermoplastischen Kunststoff ist.

3. Verbundstoff nach Anspruch 2, dadurch gekennzeichnet, daß der thermoplastische Kunststoff (2,4,6) ein Polyolefin ist.

4. Verbundstoff nach einem der Ansprüche 1 bis 3, dadurch gekennzeichnet, daß die gasundurchlässige Beschichtung (1) die oberste Schicht bildet oder zwischen Trägerschichten (2,4) liegt.

5. Verbundstoff nach einem der Ansprüche 1 bis 4, dadurch gekennzeichnet, daß die Dicke der Trägerschicht (2,4,6) zwischen 20 und 200 $\mu$m liegt.

6. Verbundstoff nach einem der Ansprüche 1 bis 5, dadurch gekennzeichnet, daß die Dicke der gasundurchlässigen Beschichtung (1) zwischen 1 und 10 $\mu$m liegt.

7. Verbundstoff nach einem der Ansprüche 1 bis 6, dadurch gekennzeichnet, daß die fertige Beschichtung (1) aus 11% Feststoff-Anteil, 86% Wasser-Anteil und 3% Alkohol-Anteil besteht.

8. Verbundstoff nach Anspruch 2 oder 3 dadurch gekennzeichnet, daß sich die Polyvinylalkohol/Melaminharz beschichtete Kunststoffolie auf einem weiteren Träger aus Papier, Pappe, Zellulosehydrat, Textilien oder Aluminium befindet.

9. Verfahren zur Herstellung eines Verbundstoffs nach einem der Ansprüche 1 bis 8, wobei auf eine Trägerschicht eine gasundurchlässige Beschichtung aufgebracht wird, dadurch gekennzeichnet, daß bei der Beschichtung eine Lösung von Polyvinylalkohol/Melaminharz vernetzt wird.

10. Verfahren nach Anspruch 9, dadurch gekennzeichnet, daß zur Vernetzung Toluolsulfonsäure als Katalysator hinzugegeben wird.

11. Verfahren nach Anspruch 9 oder 10, dadurch gekennzeichnet, daß die Beschichtung aus Polyvinylalkohol/Melaminharz durch Einwirkung von Wärme oder energiereicher Strahlung ausgehärtet wird.

12. Verfahren nach einem der Ansprüche 9 bis 11, gekennzeichnet durch folgende Schritte:
    a) Ein Folienschlauch (12) wird auf einer gebräuchlichen Folienschlauch-Blasanlage(11) hergestellt;
    b) der Folienschlauch (12) wird einer Corona-Vorbehandlungsstation (13) zugeführt und dann in ein Tauchbecken (14) geführt, in dem sich die wässrige Lösung (15) von Polyvinylalkohol/Melaminharz befindet;
    c) der Auftrag der Lösung beidseitig des Schlauches wird über Rakelwalzen (16) egalisiert;
    d) der beschichtete Schlauch wird aufgeblasen (17), die eingebrachte Luft über ein Walzenpaar (18) eingeschlossen und der Schlauch wird vor dem Walzenpaar (18) durch eine Führungseinrichtung (19) flachgelegt;
    (e) die Vernetzung und Aushärtung der Beschichtung wird auf dem Weg von der Rakelwalze (16) bis zur Flachlegung des Schlauches über Aufheizung des Schlauches durch Infrarotstrahler (20) und anschließendem Trocknen des beschichteten Schlauches im Trocknekanal (21) erreicht;
    (f) der beschichtete Schlauch wird vor der Flachlegung über ringförmige Luftdüsen (22) gekühlt;
    (g) der flachgelegte Schlauch wird in Schlauchform gewickelt oder an den Rändern durch Schlitzen oder Besäumen aufgeschnitten und in Folienbahnen getrennt gewickelt.

Fig. 1

Fig. 2

Fig. 3

Fig. 4

Fig. 5

Fig. 6

Fig. 7

Fig. 8

Fig. 9

EP 0 484 675 A2

Fig. 10